# EUROPEAN PATENT APPLICATION

(11) **EP 4 617 327 A1**
(43) Date of publication of application: **17.09.2025**
(21) Application number: 24163355.1
(22) Date of filing: 13.03.2024
(51) Int. Cl.: C09B 69/00, C09B 69/10

(54) **POLYMERIC DYES WITH ENHANCED BIODEGRADABILITY CONTAINING SACCHARIDE OR POLYSACCHARIDE BUILDING BLOCKS**

(71) Applicant: Heubach Holding Switzerland AG (Ltd), 4133 Pratteln (CH)
(72) Inventor: Sohling, Ulrich, 85356 Freising (DE); Endres, Andreas, 89264 Weißenhorn (DE); Kaja, Martin, 53006 Pardubice (CZ)
(74) Representative: Schuck, Alexander

(57) **Abstract**

A polymeric colorant of formula (I) where a is a chromophore selected from the group consisting of nitro, nitroso, monazo; bisazo, diarylmethane, triarylmethane, acridine, ethine, thiazole, indamine; oxazine, cyanine/methane, pthalocyanine and anthraquinone dye residues; L is a polyalkylene oxide linker composed of one or more alkylene oxides; selected from ethylene oxide, propylene oxide and butylene oxide; R₁ is nitrogen, - NH-, oxygen, or sulfur; R₂ is hydrogen, a methyl group, or an ethyl group; X is -NH-, - O- or -O-C(O)-; b is 1, 2 or 3; c is 1 if R₁ is NH, oxygen or sulfur, and 2 if R₁ is nitrogen; B is a sugar residue.

## Description

The invention concerns non-staining dyes with enhanced biodegradability. Color is a key ingredient in many household cleaning and fabric care products like detergents and fabric softeners. Brand owners use it to create distinctive brands and to visualize different product qualities. For example, blue might emphasize the hygienic properties of a household cleaner. Pink is frequently employed to visualize the softness for a wool detergent.

In order to use dyes in fabric care and home care formulation, they need to be designed in a manner that they are not transferred from the formulations to the substrate, e.g. dyes in house hold cleaners shall not stick at the floor after cleaning and dyes in detergents shall be removed after the washing process with the washing liquor and not stick on the fabrics and make them colored. Such dyes are called non staining dyes.

In the past decades strategies had been developed to prepare out of dyes with stable chromophores dyes with non-staining properties. A frequently used approach is the chemical modification of the dyes with several ethylene glycol units. This enhances the solubility of the dyes in water and reduces the adsorption of the dyes to the fabrics during the washing process. Such dyes are described e.g. in US 4846846 and EP 1828314 by Milliken.

In the following, the prior art is summarizes with respect to a modification of dyes with natural, biodegradable building blocks. US 6281269 to Hewlett Packard with the title "Fluid set for ink-jet printers" describes dyes, and more particularly, water fast ink-jet ink compositions containing the same. The dyes of this invention, when interacted with a second reactive fluid or 5th pen fluid, provides permanence benefits, such as smear fastness, smudge fastness, and water fastness. The invention described therein includes sugar modified triazine dyes. The focus of this patent is on the application properties of the dyes. Biodegradability of the protected dyes is not mentioned. EP 1462484 relates to new coloring agents comprising a chromophore bound, via an ether or ester bond, to one or more molecules of a mono- or disaccharide, the process for preparing them, and their use in the dyeing of textile fibers. These dyes however turned to be soluble in water only when the chromophore molecular weight is below 250.

EP 2085434 describes disperse dyes soluble in water of general formula D-L-Sn wherein D is a disperse dye insoluble in water, L is a linker, S is a sugar, and n is from 2 to 4. The linker L comprises glutamate or succinate units. In particular are described dyes wherein the sugar S is 6'-deoxy-6'-amino-lactose. Said dyes, in comparison with the corresponding non-glycoconiugated dyes, are able to dye in a homogeneous way natural fibers and textiles and also textile materials including different fibers, and have high biodegradability through digestion by microorganisms, that found in the molecule itself a useful nourishment for their survival and proliferation. Processes for the preparation of the above said dyes and their use are also described. In the former two references, the modification of the original dyes aims at an enhancement of the water solubility of the original dye. Although a potential improvement in the environmental impact is mentioned in these documents, no biodegradability data or calculations are provided. EP 2992053 with the title "Coloring agents naturalized with the 6'-deoxy-6'-(piperazinyl)lactose moiety" refers to coloring products soluble in water at room temperature. Here a piperazine unity is inserted, bonded directly to the saccharidic unity. This moiety affords to the final glycoconjugated colorants some very advantageous characteristics for dyeing leather, textiles, wood and hairs. The main focus of the modifications of the original dye is enhancement of solubility. WO 2022/197295 with the title "Polymeric colorants with reduced staining" relates to polymeric colorants that do not stain clothing, plastic or metal when used in consumer products, such as laundry detergents, fabric softeners and dish detergents. The polymeric colorants contain at least one carboxymethyl capped alkyleneoxy chain to improve the fugitivity and staining properties. It is believed that the incorporation of a carboxymethyl cap on the end of the alkyleneoxy chain of polymeric colorants further increases the water solubility, while not decreasing the color strength of the colorant.

It is an object of the present invention to provide further non-staining colorants for the use in household cleaning and fabric care products with improved biodegradability.

The object is achieved by a polymeric colorant of formula (I) wherein: 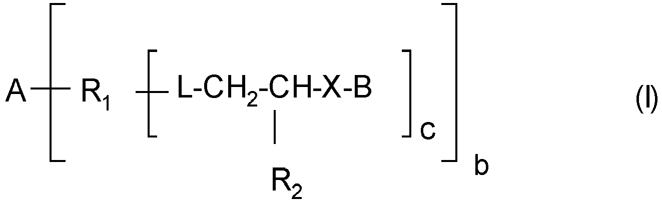
A is a chromophore selected from the group consisting of nitro, nitroso, monazo, bisazo, diarylmethane, triarylmethane, acridine, ethine, thiazole, indamine, oxazine, cyanine/methane, pthalocyanine, and anthraquinone dye residues;
L is a polyalkylene oxide linker composed of one or more alkylene oxides selected from ethylene oxide, propylene oxide and butylene oxide;
R₁ is nitrogen, -NH-, oxygen, or sulfur;
R₂ is hydrogen, a methyl group, or an ethyl group;
X is -NH-, -O- or -O-C(O)-;
b is 1, 2 or 3, preferably 2;
c is 1 if R₁ is NH, oxygen or sulfur, and 2 if R₁ is nitrogen;
B is a sugar residue.

Sugar residues B can be derived from monosaccharides, disaccharides, oligosaccharide, and polysaccharides.

Suitable monosaccharides are the cyclic hemiacetal or hemiketal forms (pyranose or furanose forms) of common aldopentoses (Ribose, Arabinose, Xylose, Lyxose), ketopentoses (Ribulose, Xylulose), aldohexoses (Allose, Altrose, Glucose, Mannose, Gulose, Idose, Galactose, Talose) and ketohexoses (Psicose, Fructose, Sorbose, Tagatose). Desoxysugars derived therefrom are also included (e. g. Desoxyribose, Fucose, Fuculose, Rhamnose).

Suitable disaccharides, oligosaccharides, and polysaccharides are dimeric, oligomeric and polymeric sugars containing one or more of the above mentioned monosaccharide units linked together by glycosidic bonds.

The monosaccharides, disaccharides, oligosaccharides, and polysaccharides can be amino sugars containing one or more amino groups instead of one or more of the hydroxyl groups. Examples are 2-Glucoseamine and Chitosan (an oligosaccharide derived from Chitin).

Preferred monosaccharide residues are derived from Glucose, Fructose, Galactose, 2-Glucoseamine, Gulose, Idose, Talose, Arabinose, Xylose Sorbose, Tagatose, Allose, Altrose or Mannose. Particularly preferred are residues derived from Glucose, Fructose, Galactose or 2-Glucosamine.

Preferred disaccharide residues are derived from Lactose, Maltose, Isomaltose Saccharose, Cellobiose, Epimelibiose, Gentiobiose, α,α'-Trehalose, Turanose, Gentiobiose, Melibiose, or Planteobiose. Particularly preferred are residues derived from Lactose, Maltose, Saccharose, Isomaltose, Maltulose, Cellubiose and Lactulose.

Preferred oligosaccharide residues containing from 3 to 10 monosaccharide units are derived from Chitosan and oligosaccharides composed of Glucose, Galactose, Fructose and /or Mannose units, such as Gentianose, Maltotriose, Manninotriose, Melezitose, Planteose and Raffinose.

Examples for polysaccharides containing more than 10 monosaccharide units are Starch, Cellulose, Chitine, Glycosamineglykanes and β-Glucanes.

Particularly preferred sugar residues B are derived from Glucose, Fructose, Galactose, 2-Glucoseamine, Lactose, Saccharose, Maltose, Gulose, Mannose, Chitosan, Maltotriose and Raffinose.

The sugar moieties can be bound via the acetalic hydroxyl group of the sugar to the polyalkyleneoxy chain, resulting in a glycoside, or via a non-acetalic hydroxyl group of the sugar, resulting in an ether, or via the amino group in case of 2-Glucoseamine and Chitosan.

Preferred chromophores A are anthraquinone, monoazo, bisazo, triphenylmethane, cyanine/methine dye and phthalocyanine dye residues.

The non-staining dyes available on the market are typically not biodegradable, as they mainly consist of non-natural components. The invention describes an approach to non-staining dyes with increased biodegradability by modification of the non-staining dyes with sugar moieties derived from monosaccharides, disaccharides, oligosaccharides and polysaccharides. Surprisingly, it was found that the biodegradability is strongly enhanced by such modifications.

The linker L can be a polyalkylene oxide-homopolymer, such as a polyethylene oxide-, a polypropylene oxide- or a polybutylene oxide-homopolymer. The linker L can be a polyalkylenoxide-copolymer, such as a polyethyleneoxy-/polypropyleneoxy-copolymer. The copolymer can be a random-copolymer (statistical copolymer) or a blockcopolmer, such as a polyethyleneoxy-/polypropyleneoxy-blockcopolymer.

The polyalkylene oxide linker L has in general a molecular weight ranging from 132 to 10 000 g/mol, preferably from 104 to 5 000 g/mol.

Preferably, L has the formula (II) 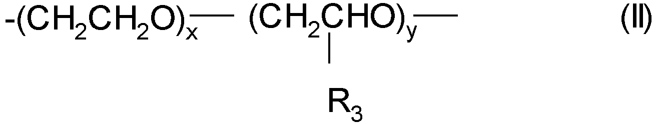
wherein R₃ is a methyl group or an ethyl group, preferably a methyl group;
x is an integer of from 0 to 20, preferably from 0 to 10, more preferably from 0 to 5;
y is an integer of from 0 to 20, preferably from 0 to 10, more preferably from 0 to 5.
x + y is in general 2 to 20, preferably 2 to 10, more preferably 2 to 8.

In a particular preferred embodiment, the polymeric colorant is a modified polymeric anthraquinone dye. Aminoanthraquinones are well known for use as dyes and coloring agents for oils, drugs, cosmetic products, waxes, and detergents. N,N'-dialkyleneoxy-substituted 1,4-diaminoanthraquinones are usually blue in shade, generally more brilliant than many other blue chromophores, and have good desirable stability properties, especially toward high alkaline environments, heat, and light. One preferred example is a polymeric colorant having the general formula (III): 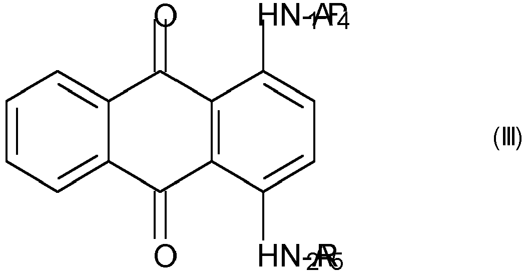 wherein:
A₁ and A₂ are, independently of each other, a polyethyleneoxy-, polypropyleneoxy-, or polyethyleneoxy-/polypropyleneoxy-linker;
the number of repeating ethyleneoxy- and/or propyleneoxy-units in each of A1 and A2 is less than or equal to 25; or
A₁ and A₂ are, independently of each other, -CH₂CH₂CH₂-M[(CH₂CH₂O)ₓ-CH₂CH₂NH-]_{y};
M can be either O or N and x = 1 - 5, and if M is O then y = 1, and if M is N then y = 2; and
R₄ and R₅ represent the terminal group of the polyalkyleneoxy chain and are independently of each other a sugar moiety derived form a monosachharide, a disaccharide, an oligosaccharide, and a polysaccharide.

There are three principal methods to prepare the new dyes bearing polyalkyleneoxy chains and sugar moieties.
(1) Activating at least one terminal oxygen atom of the polyalkyleneoxy chains of the dyestuff by known, well established methods giving a Cl, Br, I, OMesyl, OBesyl, OTosyl, OTf or ONf group (instead of OH). The resulting alkylation agent reacts with one oxygen of the sugar to the corresponding ether. In some cases, the remaining hydroxy groups in the sugar must be protected to act not as additional nucleophiles. These partial protected sugars can be prepared by known methods cited and summarized in the book from Fritz Micheel: Chemie der Zucker und Polysaccharide, mit 81 Tabellen, Akad. Verlagsges., 1956**.** After alkylation the protecting groups still present (preferably acetyl, isopropylidene or benzyl) can be removed by known procedures.

The following example is intended to illustrate this concept. The blue anthraquinone **1** is prepared from 2-[2-(3-aminopropoxy)ethoxy] ethanol, leucoquinizarin, and quinizarin, as described in EP1828314. Bischlorinated blue anthraquinone **2** is prepared from dye **1** by reaction with thionylchloride in toluene. To the reaction mixture two mol-equivalents of the diacetone sugar **3** (prepared from glucose and acetone as described by E. Fischer, Chemische Berichte,28, 1895, 1165) and triethylamine are added. After reaction for 5 hours at 40 - 80°C both Chlorines are substituted by sugar moieties. Treatment with aqueous hydrochloric acid yields the anthraquinone **4.**

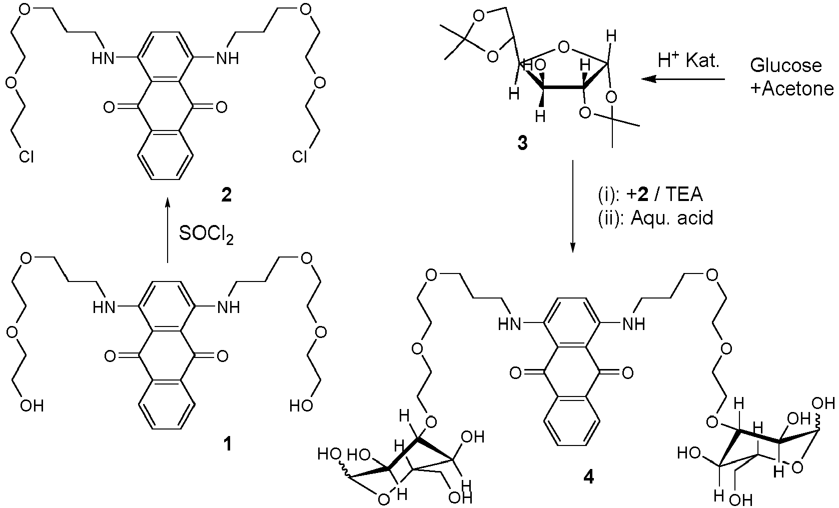

**(2)** Activating one non glycosidic OH group of a (partially protected) sugar by converting it to a Cl, Br, I, OMesyl, OBesyl, OTosyl, OTf or ONf group (instead of OH). The resulting activated sugar is alkylated by reaction of one or more terminal oxygen atom(s) of the polyalkyleneoxy chains of the dyestuff, giving the corresponding ether. The protecting groups still present (preferably acetyl, isopropylidene or benzyl) can be removed by known procedures.

The following example is intended to illustrate this concept. The 6-mesyl-tetraacetyl-glucose **2** prepared from glucose, mesylchloride and acetic acid anhydride, as described in B. Helferich et al., J. Prakt. Chem., 1939, 285, is mixed with the blue anthraquinone dye **1** and an appropriate solvent like toluene and heated in presence of a base (e.g. triethylamine) untill full turnover of the anthraquinone. The resulting dye is obtained in pure form by recrystallisation from toluene. The still attached acetyl protecting groups are removed by treatment of the dye with sodium methoxide solution in methanol, according to a procedure described by Zémplen, Chemische Berichte, 62, 1929, 2107.

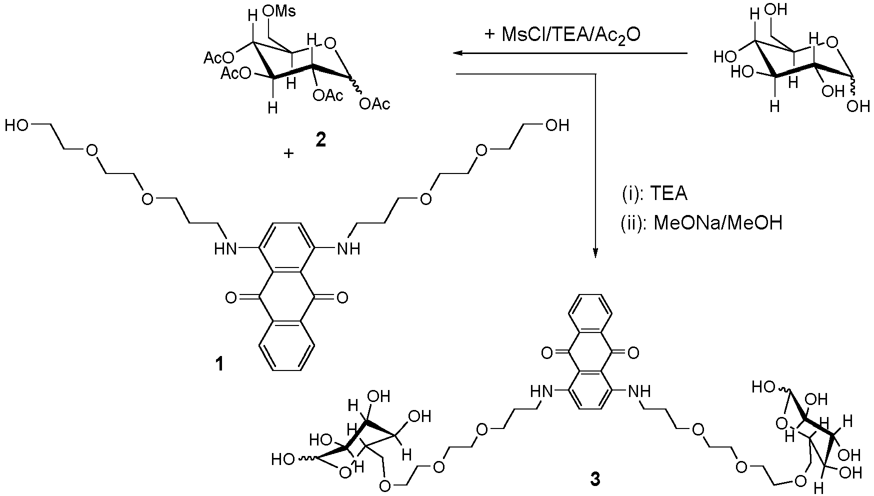

**(3)** Via the known glycosidation approaches like Königs-Knorr-, Fischer-, Helferich-or transglycosidation with final deprotection (if necessary) giving free hydroxygroups in sugars by known procedures.

The following example is intended to illustrate this concept. The methlyglycoside **2** prepared from starch, as described in E. Fischer, Chemische Berichte,28, 1895, p. 1145, is mixed with the blue anthraquinone dye **1** and an appropriate solvent like toluene and heated in presence of a catalytic amount of sulfuric acid till all methanol and finally the toluene is distilled of. The glysosylated dye is obtained as blue, water-soluble oil which may solidify.

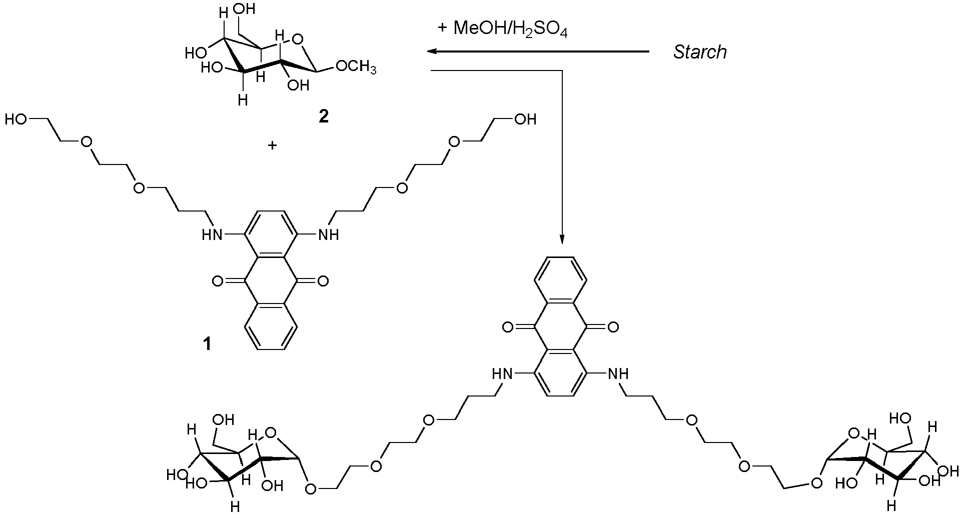

The invention also concerns the use of the polymeric colorants according to the invention as non-staining dyes in laundry detergent formulations, fabric treatment compositions, automatic dishwasher detergent compositions, dishwashing liquids, handsoap formulations, hair shampoo compositions, household cleaner or toilet cleaner compositions.

Such compositions are described in detail in Eduard Smulders, Laundry Detergents, 1st Edition 2001, Wiley-VCH, Weinheim; Liquid Detergents, Edited by Kuo-Yann Lai, 2nd Edition, CRC Press; Handbook of Detergents, Edited by Uri Zoller, 1st Edition, CRC Press.

### Laundry detergent formulations

The polymeric colorant of the present invention may be incorporated into a laundry care composition including but not limited to laundry detergents and fabric treatment compositions. As used herein, the term "laundry care composition" includes, unless otherwise indicated, granular, powder, liquid, gel, paste, unit dose bar form and/or flake type washing agents and/or fabric treatment compositions. As used herein, the term "fabric treatment composition" includes, unless otherwise indicated, fabric softening compositions, fabric enhancing compositions, fabric freshening compositions, and combinations thereof. Such compositions may be, but need not be, rinse added compositions.

Laundry care compositions of the present invention comprise one or more of said polymeric colorants containing at least one carboxymethyl capped alkyleneoxy chain and a laundry care ingredient. The polymeric colorant may be added to substrates using a variety of application techniques. For application to textile substrates, the polymeric colorant is preferably included as an additive in laundry detergent. Thus, application to the textile substrate actually occurs when a consumer adds laundry detergent to a washing machine. Similarly, rinse added fabric softening ("RAFS") compositions are typically added in the rinse cycle, which is after the detergent solution has been used and replaced with the rinsing solution in typical laundering processes. The laundry care compositions including laundry detergents may be in solid or liquid form, including a gel form. The laundry care compositions including laundry detergents may also be in a unit dose pouch. The laundry detergent composition comprises a surfactant in an amount sufficient to provide desired cleaning properties.

The polymeric colorant may be present in the laundry care composition (such as the laundry detergent composition) in an amount from about 0.0001% to about 10% by weight of the composition, more preferably from about 0.0001% to about 5% by weight of the composition, and even more preferably from about 0.0001% to about 1% by weight of the composition.

The laundry detergent composition comprises a surfactant in an amount sufficient to provide desired cleaning properties. In one embodiment, the laundry detergent composition comprises, by weight, from about 5% to about 90% of the surfactant, and more specifically from about 5% to about 70% of the surfactant, and even more specifically from about 5% to about 40%. The surfactant may comprise anionic, nonionic, cationic, zwitterionic and/or amphoteric surfactants. In a more specific embodiment, the detergent composition comprises anionic surfactant, nonionic surfactant, or mixtures thereof.

Suitable anionic surfactants useful herein can comprise any of the conventional anionic surfactant types typically used in liquid detergent products. These include the alkyl benzene sulfonic acids and their salts as well as alkoxylated or non- alkoxylated alkyl sulfate materials. [0050] Exemplary anionic surfactants are the alkali metal salts of C₁₀₋₁₆ alkyl benzene sulfonic acids, preferably CU.M alkyl benzene sulfonic acids. Preferably, the alkyl group is linear and such linear alkyl benzene sulfonates are known as "LAS". Alkyl benzene sulfonates, and particularly LAS, are well known in the art. Such surfactants and their preparation are described for example in U.S. Pat. Nos. 2,220,099 and 2,477,383.

Especially preferred are the sodium and potassium linear straight chain alkylbenzene sulfonates in which the average number of carbon atoms in the alkyl group is from about 11 to 14. Sodium C₁₁-C₁₄, e.g., C₁₂, LAS is a specific example of such surfactants.

Another exemplary type of anionic surfactant comprises ethoxylated alkyl sulfate surfactants. Such materials, also known as alkyl ether sulfates or alkyl polyethoxylate sulfates, are those which correspond to the formula: R'--0--(C₂H₄O)ₙ --SO₃M wherein R' is a C₈-C₂₀ alkyl group, n is from about 1 to 20, and M is a salt-forming cation. In a specific embodiment, R' is C₁₀-C₁₈ alkyl, n is from about 1 to 15, and M is sodium, potassium, ammonium, alkylammonium, or alkanolammonium. In more specific embodiments, R' is a C₁₂-C₁₆, n is from about 1 to 6 or even from about 1 to 3 or from about 1 to 1.5 and M is sodium.

The alkyl ether sulfates will generally be used in the form of mixtures comprising varying R' chain lengths and varying degrees of ethoxylation. Frequently such mixtures will inevitably also contain some non-ethoxylated alkyl sulfate materials, i.e., surfactants of the above ethoxylated alkyl sulfate formula wherein n=0. Non-ethoxylated alkyl sulfates may also be added separately to the compositions of this invention and used as or in any anionic surfactant component which may be present. Specific examples of non- alkoxylated, e.g., non-ethoxylated, alkyl ether sulfate surfactants are those produced by the sulfation of higher C₈-C₂₀ fatty alcohols. Conventional primary alkyl sulfate surfactants have the general formula: ROSO₃-M wherein R is typically a linear C₈-C₂₀ hydrocarbyl group, which may be straight chain or branched chain, and M is a water-solubilizing cation. In specific embodiments, R is a C₁₀-C₁₅ alkyl, and M is alkali metal, more specifically R is C₁₂-C₁₄ and M is sodium.

Suitable nonionic surfactants useful herein can comprise any of the conventional nonionic surfactant types typically used in liquid detergent products. These include alkoxylated fatty alcohols and amine oxide surfactants. Preferred for use in the liquid detergent products herein are those nonionic surfactants, which are normally liquid. Suitable nonionic surfactants for use herein include the alcohol alkoxylate nonionic surfactants. Alcohol alkoxylates are materials which correspond to the general formula: R¹ (CₘH₂ₘO)ₙOH wherein R¹ is a C₈-C₁₆ alkyl group, m is from 2 to 4, and n ranges from about 2 to 12. Preferably R¹ is an alkyl group, which may be primary or secondary, that comprises from about 9 to 15 carbon atoms, more preferably from about 10 to 14 carbon atoms. In one embodiment, the alkoxylated fatty alcohols will also be ethoxylated materials that contain from about 2 to 12 ethylene oxide moieties per molecule, more preferably from about 3 to 10 or even from about 7 to 9 ethylene oxide moieties per molecule.

The alkoxylated fatty alcohol materials useful in the liquid detergent compositions herein will frequently have a hydrophilic-lipophilic balance (HLB) which ranges from about 3 to 17. More preferably, the HLB of this material will range from about 6 to 15, most preferably from about 8 to 15. Alkoxylated fatty alcohol nonionic surfactants have been marketed under the tradenames Neodol and Dobanol by the Shell Chemical Company.

Another suitable type of nonionic surfactant useful herein comprises the amine oxide surfactants. Amine oxides are materials, which are often referred to in the art as "semi-polar" nonionics. Amine oxides have the formula:
R(EO)ₓ(PO)_{y}(BO)_{z}N(O)(CH₂R')₂ .qH₂O. In this formula, R is a relatively long-chain hydrocarbyl moiety, which can be saturated or unsaturated, linear or branched, and can contain from 8 to 20, preferably from 10 to 16 carbon atoms, and is more preferably C₁₂-C₁₆ primary alkyl. R' is a short-chain moiety, preferably selected from hydrogen, methyl and -CH₂OH. When x+y+z is different from 0, EO is ethyleneoxy, PO is propyleneneoxy and BO is butyleneoxy. Amine oxide surfactants are illustrated by C₁₂₋₁₄ alkyldimethyl amine oxide.

In the laundry detergent compositions herein, the detersive surfactant component may comprise combinations of anionic and nonionic surfactant materials. When this is the case, the weight ratio of anionic to nonionic will typically range from 10:90 to 90:10, more typically from 30:70 to 70:30.

Cationic surfactants are well known in the art and non-limiting examples of these include quaternary ammonium surfactants, which can have up to 26 carbon atoms. Non-limiting examples of zwitterionic surfactants include derivatives of secondary and tertiary amines, derivatives of heterocyclic secondary and tertiary amines, or derivatives of quaternary ammonium, quaternary phosphonium or tertiary sulfonium compounds.

Non-limiting examples of ampholytic surfactants include aliphatic derivatives of secondary or tertiary amines, or aliphatic derivatives of heterocyclic secondary and tertiary amines in which the aliphatic radical can be straight- or branched-chain. One of the aliphatic substituents comprises at least about 8 carbon atoms, typically from about 8 to about 18 carbon atoms, and at least one comprises an anionic water-solubilizing group, e.g. carboxy, sulfonate, sulfate.

As noted, the compositions may be in the form of a solid, either in tablet or particulate form, including, but not limited to particles, flakes, or the like, or the compositions may be in the form of a liquid. The liquid detergent compositions comprise an aqueous, non surface active liquid carrier. Generally, the amount of the aqueous, non-surface active liquid carrier employed in the compositions herein will be effective to solubilize, suspend or disperse the composition components. For example, the compositions may comprise, by weight, from about 5% to about 90%, more specifically from about 10% to about 70%, and even more specifically from about 20% to about 70% of the aqueous, non-surface active liquid carrier.

The most cost-effective type of aqueous, non-surface active liquid carrier is, of course, water itself. Accordingly, the aqueous, non-surface active liquid carrier component will generally be mostly, if not completely, comprised of water. However, other types of water-miscible liquids, such alkanols, diols, other polyols, ethers, amines, and the like, and mixtures thereof, may also be added to liquid detergent compositions as co solvents or stabilizers in addition to or in place of water. Accordingly, the aqueous non surface active liquid carrier component of the liquid detergent composition will generally be present in concentrations ranging from about 5% to about 90% by weight of the composition, more preferably from about 20% to about 70% by weight of the composition.

Detergent compositions may also contain bleaching agents. Suitable bleaching agents include, for example, hydrogen peroxide sources, such as those described in detail in the herein incorporated Kirk Othmer's Encyclopedia of Chemical Technology, 4th Ed (1992, John Wiley & Sons), Vol. 4, pp. 271-300 "Bleaching Agents (Survey)." These hydrogen peroxide sources include the various forms of sodium perborate and sodium percarbonate, including various coated and modified forms of these compounds.

The liquid detergent compositions are in the form of an aqueous solution or uniform dispersion or suspension of surfactant, polymeric colorant, and certain optional other ingredients, some of which may normally be in solid form, that have been combined with the normally liquid components of the composition, such as the liquid alcohol ethoxylate nonionic, the aqueous liquid carrier, and any other normally liquid optional ingredients. Such a solution, dispersion or suspension will be acceptably phase stable and will typically have a viscosity, which ranges from about 100 to 600 cps, more preferably from about 150 to 400 cps. For purposes of this invention, viscosity is measured with a Brookfield LVDV-II+ viscometer apparatus using a #21 spindle.

The liquid detergent compositions herein can be prepared by combining the components thereof in any convenient order and by mixing, e.g., agitating, the resulting component combination to form a phase stable liquid detergent composition. In a preferred process for preparing such compositions, a liquid matrix is formed containing at least a major proportion, and preferably substantially all, of the liquid components, e.g., nonionic surfactant, the non-surface active liquid carriers and other optional liquid components, with the liquid components being thoroughly admixed by imparting shear agitation to this liquid combination. For example, rapid stirring with a mechanical stirrer may usefully be employed. While shear agitation is maintained, substantially all of any anionic surfactants and the solid form ingredients can be added. Agitation of the mixture is continued, and if necessary, can be increased at this point to form a solution or a uniform dispersion of insoluble solid phase particulates within the liquid phase. After some or all of the solid-form materials have been added to this agitated mixture, particles of any enzyme material to be included, e.g., enzyme prills, are incorporated. As a variation of the composition preparation procedure hereinbefore described, one or more of the solid components may be added to the agitated mixture as a solution or slurry of particles premixed with a minor portion of one or more of the liquid components. After addition of all of the composition components, agitation of the mixture is continued for a period of time sufficient to form compositions having the requisite viscosity and phase stability characteristics. Frequently this will involve agitation for a period of from about 30 to 60 minutes.

In an alternate embodiment for forming the liquid detergent compositions, the polymeric colorant is first combined with one or more liquid components to form a polymeric colorant premix, and this premix is added to a composition formulation containing a substantial portion, for example more than 50% by weight, more specifically, more than 70% by weight, and yet more specifically, more than 90% by weight, of the balance of components of the laundry detergent composition. For example, in the methodology described above, both the polymeric colorant premix and the enzyme component are added at a final stage of component additions. In a further embodiment, the polymeric colorant is encapsulated prior to addition to the detergent composition, the encapsulated polymeric colorant is suspended in a structured liquid, and the suspension is added to a composition formulation containing a substantial portion of the balance of components of the laundry detergent composition.

As noted previously, the detergent compositions may be in a solid form. Suitable solid forms include tablets and particulate forms, for example, granular particles or flakes. Various techniques for forming detergent compositions in such solid forms are well known in the art and may be used herein. In one embodiment, for example when the composition is in the form of a granular particle, the polymeric colorant is provided in particulate form, optionally including additional but not all components of the laundry detergent composition. The polymeric colorant particulate is combined with one or more additional particulates containing a balance of components of the laundry detergent composition. Further, the polymeric colorant, optionally including additional but not all components of the laundry detergent composition, may be provided in an encapsulated form, and the polymeric colorant encapsulate is combined with particulates containing a substantial balance of components of the laundry detergent composition.

The compositions of this invention, prepared as hereinbefore described, can be used to form aqueous washing solutions for use in the laundering of textile substrates such as fabrics. Generally, an effective amount of such compositions is added to water, preferably in a conventional fabric laundering automatic washing machine, to form such aqueous laundering solutions. The aqueous washing solution so formed is then contacted, preferably under agitation, with the fabrics to be laundered therewith. An effective amount of the liquid detergent compositions herein added to water to form aqueous laundering solutions can comprise amounts sufficient to form from about 500 to 7,000 ppm of composition in aqueous washing solution. More preferably, from about 1,000 to 3,000 ppm of the detergent compositions herein will be provided in aqueous washing solution.

### Fabric Treatment Compositions / Rinse Added Fabric Softening Compositions

In another specific embodiment, the polymeric colorant of the present invention may be included in a fabric treatment composition. The fabric treatment composition may be comprised of at least one polymeric colorant and a rinse added fabric softening composition ("RAFS;" also known as rinse added fabric conditioning compositions). Examples of typical rinse added softening compositions can be found in U.S. Provisional Patent Application Serial No. 60/687582 filed on October 8, 2004. The rinse added fabric softening compositions of the present invention may comprise (a) fabric softening active ("FSA") and (b) a polymeric colorant containing at least one carboxymethyl capped alkyleneoxy chain. The rinse added fabric softening composition may comprise from about 1% to about 90% by weight of the FSA, more preferably from about 5% to about 50% by weight of the FSA. The polymeric colorant may be present in the rinse added fabric softening composition in an amount from about 0.5 ppb to about 50 ppm, more preferably from about 0.5 ppm to about 30 ppm. In one embodiment of the invention, the fabric softening active is a quaternary ammonium compound suitable for softening fabric in a rinse step. In one embodiment, the FSA is formed from a reaction product of a fatty acid and an aminoalcohol obtaining mixtures of mono-, di-, and, in one embodiment, triester compounds. In another embodiment, the FSA comprises one or more softener quaternary ammonium compounds such, but not limited to, as a monoalkyquaternary ammonium compound, a diamido quaternary compound and a diester quaternary ammonium compound, or a combination thereof.

In one aspect of the invention, the FSA comprises a diester quaternary ammonium (hereinafter "DQA") compound composition. In certain embodiments of the present invention, the DQA compounds compositions also encompasses a description of diamido FSAs and FSAs with mixed amido and ester linkages as well as the aforementioned diester linkages, all herein referred to as DQA.

A first type of DQA ("DQA (1)") suitable as a FSA includes a compound comprising the formula:

{R₄₋ₘ-N⁽⁺⁾-[(CH₂)ₙ-Y-R¹]ₘ} X⁻

wherein each R substituent is either hydrogen, a short chain C₁-C₆, preferably C₁-C₃ alkyl or hydroxyalkyl group, e.g., methyl (most preferred), ethyl, propyl, hydroxyethyl, and the like, poly (C₂₋₃ alkoxy), preferably polyethoxy, group, benzyl, or mixtures thereof; each m is 2 or 3; each n is from 1 to about 4, preferably 2; each Y is -O-(O)C-, -C(O)-O-, -NR-C(O)-, or -C(O)-NR- and it is acceptable for each Y to be the same or different; the sum of carbons in each R¹, plus one when Y is -O-(O)C- or -NR-C(O) -, is C₁₂-C₂₂ preferably C₁₄-C₂₀ with each R¹ being a hydrocarbyl, or substituted hydrocarbyl group; it is acceptable for R¹ to be unsaturated or saturated and branched or linear and preferably it is linear; it is acceptable for each R¹ to be the same or different and preferably these are the same; and X can be any softener-compatible anion, preferably, chloride, bromide, methylsulfate, ethylsulfate, sulfate, phosphate, and nitrate, more preferably chloride or methyl sulfate. Preferred DQA compounds are typically made by reacting alkanolamines such as MDEA (methyldiethanolamine) and TEA (triethanolamine) with fatty acids. Some materials that typically result from such reactions include N,N-di(acyl-oxyethyl)-N,N-dimethylammonium chloride or N,N-di(acyl-oxyethyl)-N,N-methylhydroxyethylammonium methylsulfate wherein the acyl group is derived from animal fats, unsaturated, and polyunsaturated, fatty acids, e.g., tallow, hardened tallow, oleic acid, and/or partially hydrogenated fatty acids, derived from vegetable oils and/or partially hydrogenated vegetable oils, such as, canola oil, safflower oil, peanut oil, sunflower oil, corn oil, soybean oil, tall oil, rice bran oil, palm oil, etc. [00112] Non-limiting examples of suitable fatty acids are listed in US Patent No. 5,759,990 at column 4, lines 45-66. In one embodiment, the FSA comprises other actives in addition to DQA (1) or DQA. In yet another embodiment, the FSA comprises only DQA (1) or DQA and is free or essentially free of any other quaternary ammonium compounds or other actives. In yet another embodiment, the FSA comprises the precursor amine that is used to produce the DQA.

In another aspect of the invention, the FSA comprises a compound, identified as DTTMAC comprising the formula:

[R₄₋ₘ-N⁽⁺⁾-R¹ₘ] A⁻

wherein each m is 2 or 3, each R1 is a C₆-C₂₂, preferably C₁₄-C₂₀ but no more than one being less than about C12 and then the other is at least about 16, hydrocarbyl, or substituted hydrocarbyl substituent, preferably C₁₀-C₂₀ alkyl or alkenyl (unsaturated alkyl, including polyunsaturated alkyl, also referred to sometimes as "alkylene"), most preferably C₁₂-C₁₈ alkyl or alkenyl, and branch or unbranched. In one embodiment, the Iodine Value (IV) of the FSA is from about 1 to 70; each R is H or a short chain C₁-C₆, preferably C₁-C₃ alkyl or hydroxyalkyl group, e.g., methyl (most preferred), ethyl, propyl, hydroxyethyl, and the like, benzyl, or (R²O)₂₋₄H where each R² is a C₁₋₆ alkylene group; and A⁻ is a softener compatible anion, preferably, chloride, bromide, methylsulfate, ethylsulfate, sulfate, phosphate, or nitrate; more preferably chloride or methyl sulfate.

Examples of these FSAs include dialkydimethylammonium salts and dialkylene-dimethylammonium salts such as ditallowdimethylammonium and ditallowdimethylammonium methylsulfate. Examples of commercially available dialkylenedimethyl-ammonium salts usable in the present invention are di-hydrogenated tallow dimethyl ammonium chloride and ditallowdimethyl ammonium chloride available from Degussa under the trade names Adogen^{®} 442 and Adogen^{®} 470 respectively. In one embodiment, the FSA comprises other actives in addition to DTTMAC. In yet another embodiment, the FSA comprises only compounds of the DTTMAC and is free or essentially free of any other quaternary ammonium compounds or other actives.

In one embodiment, the FSA is chosen from at least one of the following: ditallowoyloxyethyl dimethyl ammonium chloride, dihydrogenated-tallowoyloxyethyl dimethyl ammonium chloride, ditallow dimethyl ammonium chloride, ditallowoyloxyethyl dimethyl ammonium methyl sulfate, dihydrogenated-tallowoyloxyethyl dimethyl ammonium chloride, dihydrogenated-tallowoyloxyethyl dimethyl ammonium chloride, or combinations thereof.

In one embodiment, the FSA may also include amide containing compound compositions. Examples of diamide comprising compounds may include but not limited to methyl-bis(tallowamidoethyl)-2-hydroxyethylammonium methyl sulfate (available from Degussa under the trade names Varisoft 110 and Varisoft 222). An example of an amide- ester containing compound is N-[3-(stearoylamino)propyl]-N-[2-(stearoyloxy)ethoxy)ethyl)]-N-methylamine.

Another specific embodiment of the invention provides for a rinse added fabric softening composition further comprising a cationic starch. Cationic starches are disclosed in US 2004/0204337 A1.

### Suitable Laundry Care Ingredients

While not essential for the purposes of the present invention, the non-limiting list of laundry care ingredients illustrated hereinafter are suitable for use in the laundry care compositions and may be desirably incorporated in certain embodiments of the invention, for example to assist or enhance performance, for treatment of the substrate to be cleaned, or to modify the aesthetics of the composition as is the case with perfumes, colorants, dyes or the like. It is understood that such ingredients are in addition to the components that were previously listed for any particular embodiment. The total amount of such adjuncts may range from about 0.1% to about 50%, or even from about 1% to about 30%, by weight of the laundry care composition.

The precise nature of these additional components, and levels of incorporation thereof, will depend on the physical form of the composition and the nature of the operation for which it is to be used. Suitable laundry care ingredients include, but are not limited to, polymers, for example cationic polymers, surfactants, builders, chelating agents, dye transfer inhibiting agents, dispersants, enzymes, and enzyme stabilizers, catalytic materials, bleach activators, polymeric dispersing agents, clay soil removal/antiredeposition agents, brighteners, suds suppressors, dyes, additional perfume and perfume delivery systems, structure elasticizing agents, fabric softeners, carriers, hydrotropes, processing aids and/or coloring agents. In addition to the disclosure below, suitable examples of such other adjuncts and levels of use are found in U.S. Patent Nos. 5,576,282, 6,306,812 B1 and 6,326,348 B1 that are incorporated by reference.

As stated, the laundry care ingredients are not essential to Applicants' laundry care compositions. Thus, certain embodiments of Applicants' compositions do not contain one or more of the following adjuncts materials: bleach activators, surfactants, builders, chelating agents, dye transfer inhibiting agents, dispersants, enzymes, and enzyme stabilizers, catalytic metal complexes, polymeric dispersing agents, clay and soil removal/anti-redeposition agents, brighteners, suds suppressors, dyes, additional perfumes and perfume delivery systems, structure elasticizing agents, fabric softeners, carriers, hydrotropes, processing aids and/or coloring agents. However, when one or more adjuncts are present, such one or more adjuncts may be present as detailed below:
Surfactants - The compositions according to the present invention can comprise a surfactant or surfactant system wherein the surfactant can be selected from nonionic and/or anionic and/or cationic surfactants and/or ampholytic and/or zwitterionic and/or semi-polar nonionic surfactants. The surfactant is typically present at a level of from about 0.1%, from about 1%, or even from about 5% by weight of the cleaning compositions to about 99.9%, to about 80%, to about 35%, or even to about 30% by weight of the cleaning compositions.
Builders - The compositions of the present invention can comprise one or more detergent builders or builder systems. When present, the compositions will typically comprise at least about 1% builder, or from about 5% or 10% to about 80%, 50%, or even 30% by weight, of said builder. Builders include, but are not limited to, the alkali metal, ammonium and alkanolammonium salts of polyphosphates, alkali metal silicates, alkaline earth and alkali metal carbonates, aluminosilicate builders polycarboxylate compounds ether hydroxypolycarboxylates, copolymers of maleic anhydride with ethylene or vinyl methyl ether, 1,3,5-trihydroxybenzene-2,4,6-trisulphonic acid, and carboxymethyl-oxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.
Chelating Agents - The compositions herein may also optionally contain one or more copper, iron and/or manganese chelating agents. If utilized, chelating agents will generally comprise from about 0.1% by weight of the compositions herein to about 15%, or even from about 3.0% to about 15% by weight of the compositions herein. Dye Transfer Inhibiting Agents - The compositions of the present invention may also include one or more dye transfer inhibiting agents. Suitable polymeric dye transfer inhibiting agents include, but are not limited to, polyvinylpyrrolidone polymers, polyamine N- oxide polymers, copolymers of N-vinylpyrrolidone and N-vinylimidazole, polyvinyloxazolidones and polyvinylimidazoles or mixtures thereof. When present in the compositions herein, the dye transfer inhibiting agents are present at levels from about 0.0001%, from about 0.01%, from about 0.05% by weight of the cleaning compositions to about 10%, about 2%, or even about 1% by weight of the cleaning compositions.
Dispersants - The compositions of the present invention can also contain dispersants. Suitable water-soluble organic materials are the homo- or co-polymeric acids or their salts, in which the polycarboxylic acid may comprise at least two carboxyl radicals separated from each other by not more than two carbon atoms.
Enzymes - The compositions can comprise one or more detergent enzymes, which provide cleaning performance and/or fabric care benefits. Examples of suitable enzymes include, but are not limited to, hemicellulases, peroxidases, proteases, cellulases, xylanases, lipases, phospholipases, esterases, cutinases, pectinases, keratanases, reductases, oxidases, phenoloxidases, lipoxygenases, ligninases, pullulanases, tannases, pentosanases, malanases, b-glucanases, arabinosidases, hyaluronidase, chondroitinase, laccase, and amylases, or mixtures thereof. A typical combination is a cocktail of conventional applicable enzymes like protease, lipase, cutinase and/or cellulase in conjunction with amylase.
Enzyme Stabilizers - Enzymes for use in compositions, for example, detergents can be stabilized by various techniques. The enzymes employed herein can be stabilized by the presence of water-soluble sources of calcium and/or magnesium ions in the finished compositions that provide such ions to the enzymes.
Catalytic Metal Complexes - Applicants' compositions may include catalytic metal complexes. One type of metal-containing bleach catalyst is a catalyst system comprising a transition metal cation of defined bleach catalytic activity, such as copper, iron, titanium, ruthenium, tungsten, molybdenum, or manganese cations, an auxiliary metal cation having little or no bleach catalytic activity, such as zinc or aluminum cations, and a sequestrate having defined stability constants for the catalytic and auxiliary metal cations, particularly ethylenediaminetetraacetic acid, ethylenediaminetetra (methyl-enephosphonic acid) and water-soluble salts thereof. Such catalysts are disclosed in U.S. Patent No. 4,430,243.

If desired, the compositions herein can be catalyzed by means of a manganese compound. Such compounds and levels of use are well known in the art and include, for example, the manganese-based catalysts disclosed in U.S. Patent No. 5,576,282. Cobalt bleach catalysts useful herein are known, and are described, for example, in U.S. Patent Nos. 5,597,936 and 5,595,967. Such cobalt catalysts are readily prepared by known procedures, such as taught for example in U.S. Patent Nos. 5,597,936, and 5,595,967.

Compositions herein may also suitably include a transition metal complex of a macropolycyclic rigid ligand - abbreviated as "MRL". As a practical matter, and not by way of limitation, the compositions and cleaning processes herein can be adjusted to provide on the order of at least one part per hundred million of the benefit agent MRL species in the aqueous washing medium, and may provide from about 0.005 ppm to about 25 ppm, from about 0.05 ppm to about 10 ppm, or even from about 0.1 ppm to about 5 ppm, of the MRL in the wash liquor.

Preferred transition-metals in the instant transition-metal bleach catalyst include manganese, iron and chromium. Preferred MRL's herein are a special type of ultra-rigid ligand that is cross-bridged such as 5,12-diethyl-1,5,8,12-tetraazabicyclo[6.6.2]hexadecane. Suitable transition metal MRLs are readily prepared by known procedures, such as taught for example in WO 00/32601, and U.S. Patent No. 6,225,464.

### Automatic Dishwasher Detergent

Different kinds of dishwashing detergents contain different combinations of ingredients. Common ingredients include:
Sequestrants/Blulders: Bind calcium and magnesium ions to prevent 'hard-water' type limescale deposits. They can cause ecological damage, and have been partially banned or phased out. Typicals sequestrants are phosphates. Due to their environmental impacts they have been substitutes by other compounds: Phosphate-free automatic dishwashing compositions typically rely on non-phosphate builders, such as salts of citrate, carbonate, silicate, disilicate, bicarbonate, aminocarboxylates and others to sequester calcium and magnesium from hard water, and upon drying, leave an insoluble visible deposit. Content typically: 20 to < 98.6 wt% (preferably, 30 to 90 wt%; more preferably, 40 to 85 wt%; most preferably, 50 to 75 wt%), based on weight of the automatic dishwashing composition.
Oxygen-based bleaching agents (older-style powders and liquids contain chlorine-based bleaching agents): Break up and bleach organic deposits. An example is an percarbonate / TAED (tetra acetyl ethylene diamine)mixture.
Non-ionic surfactants: Lower the surface tension of the water, emulsifies oil, lipid and fat food deposits, prevents droplet spotting on drying. Content of nonionic surfactant is 0.2 to 20 wt% (preferably, 1 to 15 wt%; more preferably, 2 to 12 wt%; most preferably, 3 to 10 wt% wherein the non-ionic surfactant is selected from the group consisting of polyoxyalkylene surfactants, polyalkylene glycol esters, polyoxyethylene derivatives of fatty acid esters of polyhydric alcohols, fatty acid esters of polyalkoxylated polyhydric alcohols, polyalkoxylated natural fats and oils, polyalkylene oxide block copolymers, alkyl poly glucosides, sucrose esters and mixtures thereof. Still more preferably, the automatic dishwashing composition of the present invention, comprises: 0.2 to 20 wt% (preferably, 1 to 15 wt%; more preferably, 2 to 12 wt%; most preferably, 3 to 10 wt%), based on weight of the automatic dishwashing composition, of a nonionic surfactant: wherein the non-ionic surfactant includes a fatty alcohol alkoxylate.
Alkaline salts: These are a primary component in older and original-style dishwasher detergent powders. Highly alkaline salts attack and dissolve grease, but are extremely corrosive (fatal) if swallowed. Salts used may include metasilicates, alkali metal hydroxides, sodium carbonate etc.
Enzymes: Break up protein-based food deposits, and possibly oil, lipid and fat deposits. The enzymes used are similar to the ones used in laundry. Typical enzymes in ADW formulations are Proteases and Amylases.
Anti-corrosion agent(s): Often sodium silicate, this prevents corrosion of dishwasher components.

Dishwashing detergent may also contain
- Anti-foaming agents: Foam interferes with the washing action. Foam may affect operation of the machine's water-level sensors and will leak past the door seals.
- Additives to slow down the removal of glaze & patterns from glazed ceramics
- Perfumes
- Anti-caking agents (in granular detergent)
- Starches (in tablet based detergents)
- Gelling agents (in liquid/gel based detergents)

Dishwasher detergents are generally strongly alkaline (basic).

In cased of ADW tabs additional components are needed to get stable tabs on the one hand and fast dissolution of the tabs on the other hand.

Tabletting and filling agents: These agents are vital for the success of the tabletting process, which is a critical stage, especially at high speeds. Poor compression can lead to a lot of powder waste, problems with tablet ejection, clogging of tools, repeated defects, and even line stoppage.

Effervescent agents: The role of effervescent agents is to help dissolve the tablet in contact with water. Effervescent agents ensure excellent dissolution of the tablet, as its breakdown time is a major factor in washing efficiency, and therefore the presence of residues is not acceptable.

### Dishwashing Liquids

Dishwashing liquids are formulated with a combination of ingredients that work together to remove food residues, grease, and dirt from your dishes. The main components include surfactants, enzymes, fragrances, dyes, and preservatives. Each ingredient plays a crucial role in the overall cleaning process and contributes to the effectiveness of the product. In addition to these primary ingredients, dishwashing liquids may also contain other additives, such as foam boosters, stabilizers, and pH adjusters, which help improve the product's performance and stability. In the following sections, we will delve deeper into the functions and properties of each of these key dishwashing liquid active ingredients.

Surfactants, or surface-active agents, are the primary cleaning agents in dishwashing liquids. They reduce the surface tension of water, allowing it to penetrate and lift away grease, oil, and dirt from the surfaces of dishes. The three main types of surfactants used in dishwashing liquids are anionic, nonionic, and amphoteric surfactants.

### Anionic Surfactants

Anionic surfactants are the most commonly used surfactants in dishwashing liquids due to their excellent cleaning power and foaming properties. They carry a negative charge, which helps them effectively bind to and remove positively charged dirt and grease particles. Here are three widely used anionic surfactants in dishwashing liquids:
Sodium Lauryl Sulfate (SLS): SLS is a strong surfactant known for its excellent foaming and emulsifying abilities. It effectively breaks down grease and oil and is commonly used in many household cleaning products, including dishwashing liquids. Sodium Laureth Sulfate (SLES): SLES is a milder surfactant compared to SLS and is often used as an alternative for those with sensitive skin. It also provides excellent cleaning and foaming properties, making it a popular choice for dishwashing liquids. Currently, SLES is the most used surfactant in dishwashing liquid worldwide. It's highly cost-effective and accessible.
Linear Alkyl Benzene Sulphonic Acid (LABSA): LABSA is a biodegradable anionic surfactant with powerful cleaning and foaming capabilities. It is widely used in dishwashing liquids, laundry detergents, and other cleaning products.

Nonionic Surfactants

Nonionic surfactants do not carry a charge and are known for their mildness and compatibility with other surfactants. They are often used in dishwashing liquids formulated for sensitive skin or in combination with anionic surfactants to enhance cleaning performance. Here are two examples of nonionic surfactants commonly used in dishwashing liquids:
Fatty Alcohol Polyoxyethylene Ether (AEO-9): AEO-9 is a mild, nonionic surfactant derived from fatty alcohols. It provides effective cleaning and emulsification properties while being gentle on the skin.
Cocamide DEA: Cocamide DEA is a nonionic surfactant derived from coconut oil. It acts as a foam booster and stabilizer, enhancing the cleaning performance and foam quality of dishwashing liquids. It also contributes to the thickness and texture of the formula.

### Amphoteric Surfactants

Amphoteric surfactants can carry either a positive or negative charge depending on the pH of the solution. They are typically used in dishwashing liquids to enhance the cleaning and foaming properties of anionic and nonionic surfactants. Here are two examples of amphoteric surfactants commonly used in dishwashing liquids:
Cocamidopropyl Betaine: This amphoteric surfactant is derived from coconut oil and has excellent foaming and thickening properties. It is often used in combination with other surfactants to boost cleaning performance and enhance the mildness of the product.
Cocamidopropylamine Oxide: This amphoteric surfactant is also derived from coconut oil and is known for its excellent foam stability and cleaning capabilities. It can enhance the performance of other surfactants and is often used in formulations for sensitive skin.

In conclusion, the choice of surfactants in dishwashing liquids plays a crucial role in their cleaning performance, foam quality, and mildness. With the growing trend towards gentle, skin-friendly products, ultra-mild surfactants such as amino acid-based surfactants and Alkyl Polyglycosides are gaining popularity in the formulation of dishwashing liquids. Amino acid-based surfactants, derived from natural amino acids, offer good cleaning performance and outstanding compatibility with the skin, making them ideal for sensitive skin or allergy-prone users. Alkyl Polyglycosides, which are plant-derived and readily biodegradable, also provide effective cleaning and foaming properties while being gentle on the skin and the environment.

### The Role of Enzymes in Dishwashing Liquids

Enzymes are protein molecules that act as biological catalysts, speeding up chemical reactions without being consumed in the process. In dishwashing liquids, enzymes are added to enhance the cleaning performance by breaking down stubborn food residues, such as proteins, starches, and fats.

Common enzymes found in dishwashing liquids include proteases, which break down proteins; amylases, which break down starches; and lipases, which break down fats and oils. By targeting specific types of food residues, enzymes help to remove tough stains and build-up that may be resistant to surfactants alone.

### Fragrances, Dyes, and Preservatives in Diswashing Liquids

Fragrances and dyes are added to dishwashing liquids to provide a pleasant scent and appealing color. These ingredients do not contribute to the cleaning power of the product but can enhance the user experience. Fragrances are typically synthetic, but some natural and essential oil-based fragrances can also be found in eco-friendly and organic dishwashing liquids.

Dyes are used to give the dishwashing liquid its color and can be either synthetic or natural, depending on the product's formulation. While dyes have no impact on cleaning performance, they can make the product more visually appealing to consumers.

Preservatives are added to dishwashing liquids to prevent microbial growth and prolong the shelf life of the product. Common preservatives used in dish soaps include benzisothiazolinone, methylisothiazolinone, and phenoxyethanol. These ingredients help to maintain the product's quality and effectiveness over time by inhibiting the growth of bacteria, mold, and yeast that could otherwise spoil the liquid.

### Handsoap formulations

The primary components include water, surfactants, co-surfactants, emollients, thickeners, preservatives, fragrances. Additional components can be Foaming agent, humectants like Glycerol for moisture retention and chelating agent like EDTA salts for formulation stabilization.

Surfactants are the backbone of hand soap formulations, with Sodium Lauryl Sulfate (SLS) and Sodium Laureth Sulfate (SLES) being the most common. They help in breaking down oils and dirt on the skin, making it easier to rinse them away. Co-surfactants, or known as secondary surfactants such as Cocamidopropyl Betaine and Dodecyl Dimethyl Betaine, enhance the foaming and cleaning abilities of the surfactants, while also adding a layer of mildness to the formulation.

### Shampoo

The composition of a typical Hair shampoo is given in the following Table.

| Ingredient | Function | Common Options | Weight ratio, % (By active content) |
|---|---|---|---|
| Primary surfactants | Foaming, cleansing | Sodium Laureth Sulfate(SLES) | 8-12 |
| | | Sodium Lauryl Sulfate(SLS) | |
| | | Ammonium Laureth Sulfate (ALES) | |
| | | Sodium Cocoyl Isethionate (SCI) | |
| | | Sodium Lauroyl Methyl Isethionate (SLMI) | |
| | | etc. | |
| Secondary surfactants | Foam enhancing, cleansing, thickening, reducing irritation | Cocamidopropyl Betaine(CAPB) | 2-5 |
| | | Cocamidopropylamine Oxide(CAO) | |
| | | Lauramine Oxide | |
| | | Cocamide DEA | |
| | | Cocamide MEA | |
| | | Alkyl Polyglycoside(APG) | |
| | | Various Amino acid surfactants | |
| | | etc. | |
| Thickeners | Viscosity building | Salt | 2-3 |
| | | PEG-150 Distearate | |
| | | Cetearyl Alcohol | |
| | | Acrylates Copolymer | |
| | | Carbomer | |
| | | etc. | |
| Foam boosters/ stabilizers | Foam boosting & stabilizing | Betaines, Lactylate, "gum", etc. | 0.1-1 |
| Conditioners | Hair conditioning | Polyquat., silicone, etc. | 0.1-1.0 |
| Suspending agents | Suspending insoluble ingredients | Xanthan gum, carbomer, guar, etc. | 0.1-1.0 |
| Opacifiers/ Pearlizers | Providing pearlescent effect | Glycol stearate, Titanium Dioxide, Polyacrylate, etc. | 1.0-2.0 |
| Preservatives | Preservation | Paraben, DMDMH, etc. | 0.1-0.5 |
| Fragrance | Aroma | Fragrance, Essence | 0.2-1.0 |
| Humectants | Moisturizing | Propylene glycol | 0.25-1.0 |
| | | Glycerin | |
| | | Allantoin | |
| | | etc. | |
| Colorants | Coloring | Approved colorants | As needed |
| Chelating agents | Surfactant stabilizing, Preservative enhancing | EDTA salts, Citric acid, etc. | 0.05-0.15 |
| pH adjuster | Adjusting pH level | Citric acid, Lactic acid, Phosphoric acid, etc. | q.s. to achieve the desired pH |
| Marketing ingredients | Providing specific benefits (Hair strengthening, antidandruff, color-protecting, etc.) | Zinc pyrithione, Salicylic acid, Vitamins, Antioxidants, Plant extracts, etc. | As per FDA |
| Deionized water | Solvent, Carrier | Deionized water | q.s. to |

The invention is further detailed by the following examples.

### EXAMPLES

### EXAMPLE 1

### Intermediate A - dichloride of the dye

### Structure 1 / dye:

### 1,4-bis({3-[2-(2-hydroxyethoxy)ethoxy]propyl}amino)-9,10-dihydroanthracene-9,10-dione

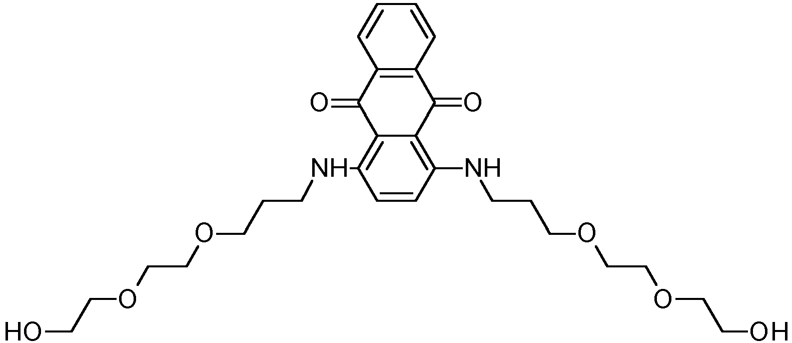

### Structure 2 /dye di-chloride:

### 1,4-bis({3-[2-(2-chloroethoxy)ethoxy]propyl}amino)-9,10-dihydroanthracene-9,10-dione

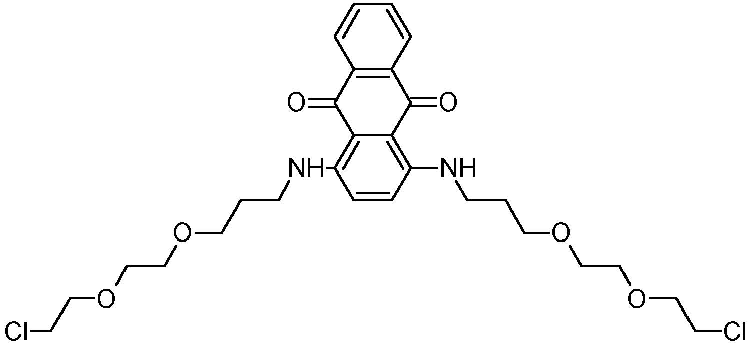

40.9 g of Blue dye Structure 1 (530.6 g/mol; 77.1 mmol; 1 equivalent) is added to a flat-bottomed flask containing CHCl₃ in an amount of 9.8 g/g dye. The mixture is stirred for 15 minutes at 20-30°C. The mixture of 22 g of thionyl chloride (SOCl₂; 119 g/mol; 185 mmol; 2.4 equivalents) and 100 g CHCl₃ are added dropwise over 4 hours at 10-15°C, followed by 0.2 g DMF (73.1 g/mol; 0.7 mmol; 0.036 equivalents). The mixture is then kept at 60°C for 1 day until the original dye has completely reacted. The mixture changes color from blue to red violet after adding SOCl₂. The reaction mixture is then poured into a beaker with 1 L of water (10-15°C). The mixture is stirred for 5 minutes, then the aqueous top layer is decanted. Then 1 L of cold water is added again and the decantation process is repeated until the pH of the aqueous phase is > 4.

Then the CHCl₃ layer with a small amount of water is put into a separator and the water is separated more completely.

The organic layer with very small amounts of water is placed in a beaker with a stirrer, about 5 g of anhydrous CaCl₂ are added, and the organic layer is stirred for about 1 h. Solid parts are then separated from the organic phase by filtration, CHCl₃ is then distilled off from the organic layer at 90-95 °C/ 50 mbar. 39.7 g of the product dichloride of the dye (structure 2; 567 g/mol; 91% theoretical yield) are obtained in in the form of a blue thick liquid. The Intermediate A is the dichloride of dye, Rf = 0.54 (TLC, Silufol UV 254, acetone - hexane 1:2).

### EXAMPLE 2

### Intermediate B - diiodide of dye

### Structure 31 dye di-iodide:

### 1,4-bis({3-[2-(2-iodoethoxy)ethoxy]propyl}amino)-9,10-dihydroanthracene-9,10-dione

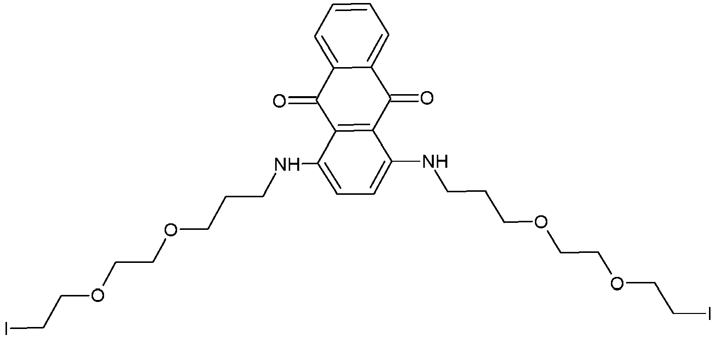

To a 500 ml Erlenmayer flask is added intermediate A (dye dichloride; 35.1 g; 1 eq; 61.9 mmol, 567 g/mol), 270 g of acetone, and Nal (65 g; 7 eq; 434 mmol; 149.9 g/mol). The resulting solution is stirred for 48 h at 70°C. Once the reaction is complete (reacted di-Cl), the reaction mixture is filtered (removal of NaCl), and acetone is distilled off from the obtained solution. The distillation residue is stirred in 300 g of CHCl₃ at laboratory temperature (5 min), then it is filtered through a folded filter, the solid part (Nal + NaCl) is washed with approx. 2 x 50 ml of CHCl₃ to a light blue color. After evaporation of CHCl₃, 45.5 g (750.4 g/mol) of a blue viscous substance is obtained: the diiodide of the dye - Intermediate B, structure 3. Yield 98% th. Rf = 0.61 (TLC, Silufol UV 254, acetone - hexane 1:2).

### EXAMPLE 3 - chitosan dye

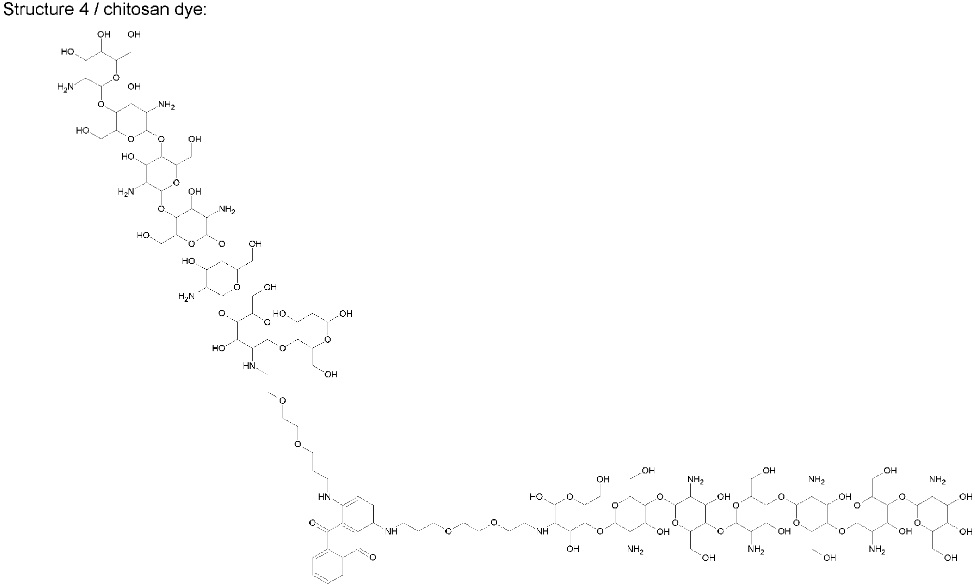

The intermediate B, the diiodide of the dye from example 2, in an amount of 5 g (6.7 mmol, 1 eq; 750.4 g/mol), 100 g of aceton, 18.1 g of Chitosan (13.3 mmol, ~7 NH₂ units per molecule, ~ 1359 g/mol), 1.7 g of triethylamine (TEA; 16.8 mmol, 2.5 eq, 101.1g/mol) are added into a 250 ml flask with a flat bottom and, the reaction mixture is heated at 105°C for 48 h. The product is formed as a thick viscous liquid at the bottom of the flask. After the reaction is complete, the dioxane liquid part is decanted and the remaining viscous part is mixed with 300 ml of acetone. TEA, dioxane and acetone are distilled off from the resulting solution. The product of structure 4 (12.9 g) is obtained as thick blue liquid that is completely soluble in water. Rf = 0.05 (TLC, Silufol UV 254, acetone).

### Example 4 - di-glucose dye

### Intermediate C - Structure 5 / Semi-product of dye di-glucose:

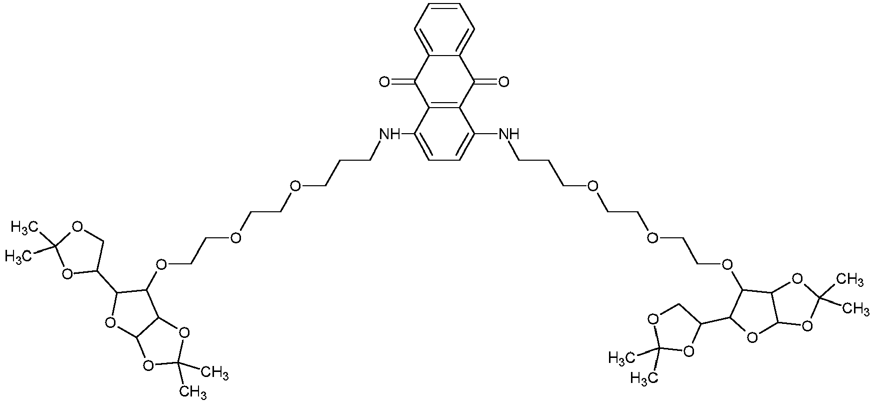

The Intermediate C - dye diacetone-D-glucose: 30 g (0.17 mol) anhydrous glucose is added to 0.6 L of acetone. The mixture is cooled with water/ice to 0-5°C. It is added within 6 hours drop by drop. H₂SO₄ (30 ml) so that the temperature does not exceed 8°C. After dosing the acid, the mixture is cooled to 0°C and neutralized with 154 g of 50% KOH to pH~ 7 (pH paper - sample drop + 1 drop of water). Stir overnight at lab. temperature, then filtration (K₂SO₄/glucose), the product remains in acetone, solvent is distilled out at 60-100°C, 200 mbar.

The distillation residue is dissolved in 150 ml of CHCl₃ and shaken with 2 x 200 ml of water (the pH of the last aqueous part should be > 7). The chloroform layer is dried with anhydrous CaCl₂, after separation of the desiccant, the solvent is evaporated from the solution at 80-100°C, 200 mbar. The product (intermediate C, structure 5) is obtained as a denser liquid in the amount of 28.5 g i.e. 65% w/w. (Mr = 260.3 g/mol), which after time solidifies into a crystalline substance.

The Intermediate B, the diiodide of the dye from example 2, in an amount of 10 g (13.3 mmol, 1 eq; 750.4 g/mol), 100 g of Acetone, 8 g of Intermediate C (30.7 mmol, 2.3 eq, 260.3 g/mol), 3.8 g of triethylamine (TEA; 37.6 mmol, 2.8 eq, 101.1 g/mol) are added into a 250 ml flask with a flat bottom, and the reaction mixture is heated at 80°C for 48 h. After the reaction is complete, solvent and TEA is evaporated at 80-100°C, 200 mbar. A distillation residue was obtained in the amount of 14.2 g (854.9 g/mol di-glucose blue dye; 11.4 g ~ 100% th. + 3.4 g I- = 14.8 g), containing the product (structure 6) in the form of a viscous blue liquid., Rf = 0.05 (TLC, Silufol UV 254, acetone : water = 1 : 1).

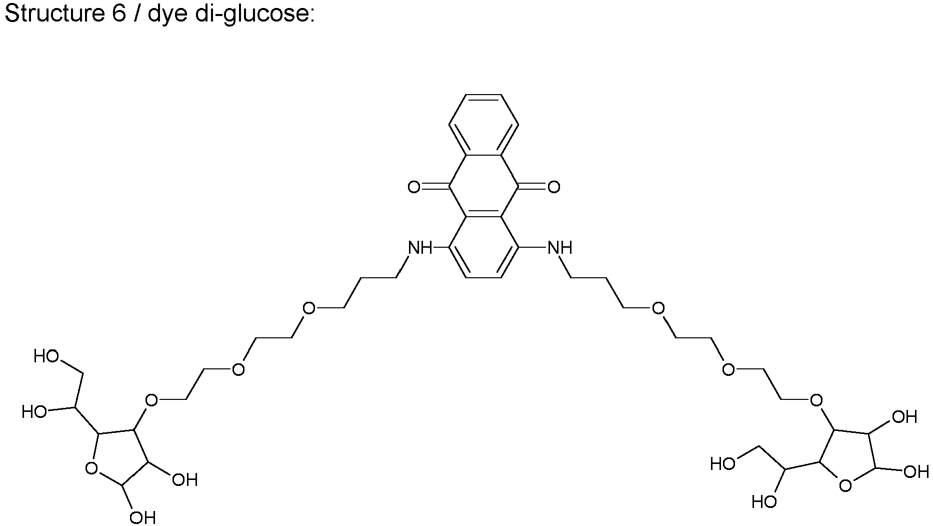

### EXAMPLES 5 to 13

### QSAR Predictions of New Structures

In the past, so-called Quantitative-Structure-Activity-Relationships QSAR have been developed and successfully applied to predict the biodegradability of chemical structures. The details of such approaches are described e.g. in:
OECD QSAR Toolbox Application Manual:
   https://www.oecd.org/chemicalsafety/risk-assessment/TB4 Application manual F1.compressed.pdf
ECHA Guidance on information requirements and chemical safety assessment - Chapter R.6: QSARs and grouping of chemicals:
   https://echa.europa.eu/documents/10162/17224/information_requirements_r6_en.pd f/77f49f81 -b76d-40ab-8513-4f3a533b6ac9
In-silico analyses were conducted using various models integrated into Estimation Program Interface (EPI) Suite (v4.11, June 2017) and Danish (Q)SAR Models

### 1. EPI Suite^{™}-Estimation Program

### https://www.epa.gov/tsca-screening-tools/epi-suitetm-estimation-program-interface

This Windows-based physical-chemical properties and environmental fate estimation software package was developed by the U.S. Environmental Protection Agency (US EPA) and Syracuse Research Corporation (SRC). The EPI Suite calculations are based primarily on fragment constants (group contributions) method utilizing a training set of chemicals and validated using another independent set of chemicals. EPI Suite runs all estimation programs using input such as the canonical Simplified Molecular Line Input System (SMILES) (US EPA and OCSPP, 2017).

In order to estimate potential biodegradability of a substance, BIOWIN v4.11, one of the models within EPISUITE, was used.

BIOWIN estimates the probability of rapid aerobic and anaerobic biodegradation of an organic compound in the presence of mixed populations of environmental microorganisms. BIOWIN contains seven separate models. This version (v4.11) designates the models as follows:
Biowin1 = linear probability model
Biowin2= nonlinear probability model
Biowin3 = expert survey ultimate biodegradation model
Biowin4 = expert survey primary biodegradation model
Biowin5 = MITI linear model
Biowin6 = MITI nonlinear model
Biowin7 = anaerobic biodegradation model

Ready biodegradability is predicted using Biowin3 and Biowin5 results. The exact method is described in the BIOWIN manual and is based on the application of Bayesian analysis to ready biodegradation data for US Premanufacture Notification (PMN) chemicals, derived collectively from all six OECD301 test methods plus OECD310.

### 2. Danish (Q)SAR Models

### https://qsarmodels.food.dtu.dk

The Danish (Q)SAR Models interface is a publicly accessible, browser-based tool, using several models developed by the Technical University of Denmark (DTU) in the Leadscope Software (Leadscope Predictive Data Miner / LSE v. 3.5.3-5 ) in order to predict (eco)toxicological and biodegradability properties of chemical structures. Model input parameters include drawing of chemical structure, SMILES/MOL/SDF input, or chemical name search.

Ready biodegradability is assessed based on a training set of 735 structures, with cross validation results of sensitivity = 87.3%, specificity = 85.2 %, and concordance = 86.4 %.

### Used Model in the Examples and Results

The Biowin 5 model (Linear MITI Model) is applied to the structures claimed in this patent. In the following the results are presented with the results of the starting compound [base dye: (1,4-bis({3-[2-(2-hydroxyethoxy)ethoxy]propyl}amino)-9,10-dihydroanthracene-9,10-dione] as comparison.

The calculations reflect the significant increase in biodegradability of the claimed chemical structures compared to the starting structure. Surprisingly, this increase in biodegradability was achieved by these small modification of the entire structure. The calculated biodegradability of the target compounds already increases with only one attached glucose molecule. Addition of a second glucose molecule increases the biodegradability further. With glucose as the two sugar units the data show better biodegradability if the glucose is fixed with the anomeric OH group to the dye, as compared to the fixation at the 6-position of the glucose units.

Using 2-aminoglucose as sugar unit, the calculated biodegradability is significantly higher when the 2-aminoglucose is fixed to the PEG units of the dye via the amino group and not via a hydroxyl group. 2-aminoglucose is also the building block of Chitosan.

### EXAMPLE 5 (comparison)

### Base dye: 1,4-bis({3-[2-(2-hydroxyethoxy)ethoxy]propyl}amino)-9,10-dihydroanthracene-9,10-dione

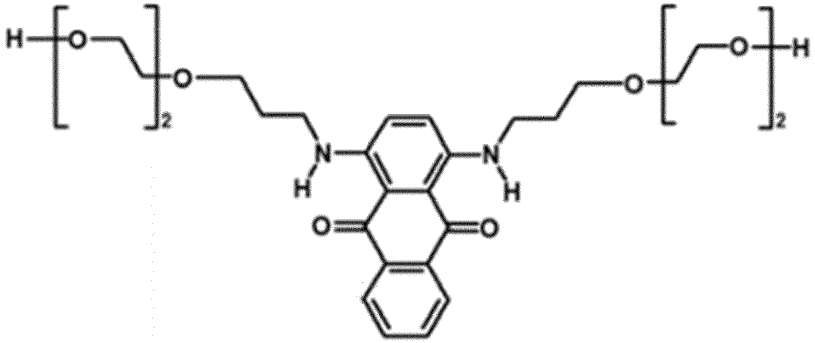

### Result from MITI model calculation: 0.1229

### EXAMPLE 6

### Glucose monoglycosid of the base dye

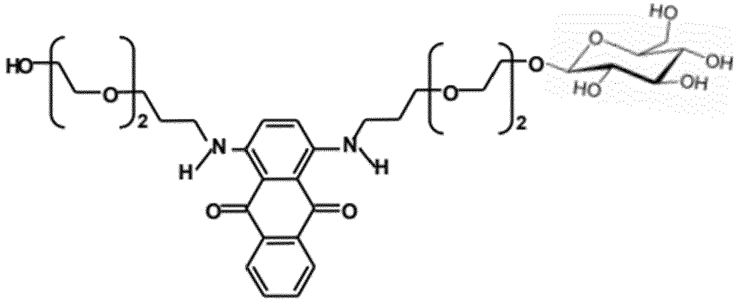

### Result from MITI model calculation: 0.2385

### EXAMPLE 7

### Glucose diglycosid of the base dye

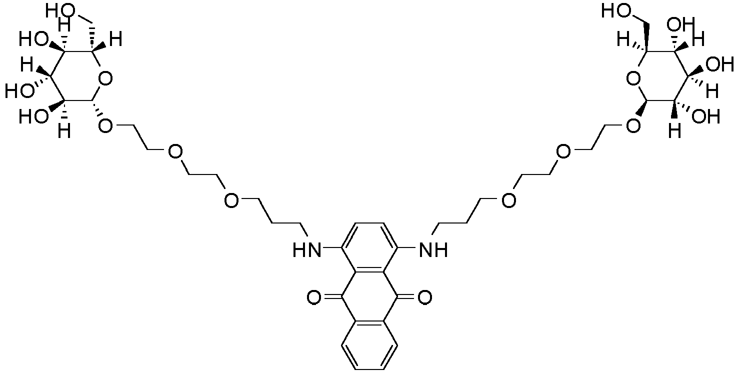

### Result from MITI model calculation: 0.3542

### EXAMPLE 8

### Monosucralose derivative of the base dye

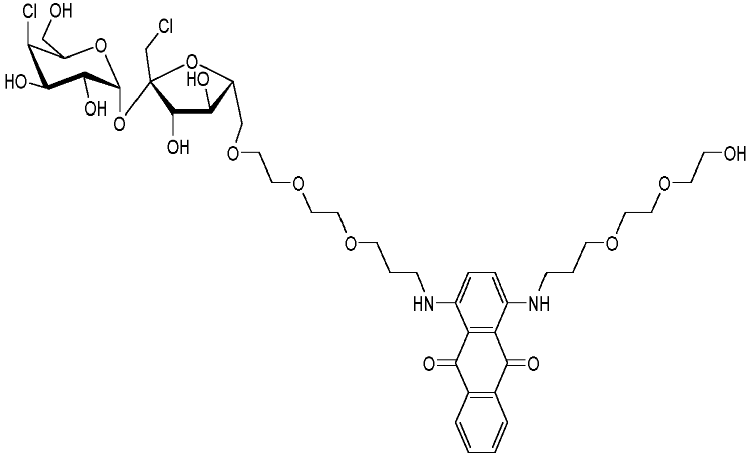

### Result from MITI model calculation: 0.0164

### EXAMPLE 9

### Disucralose derivative of the base dye

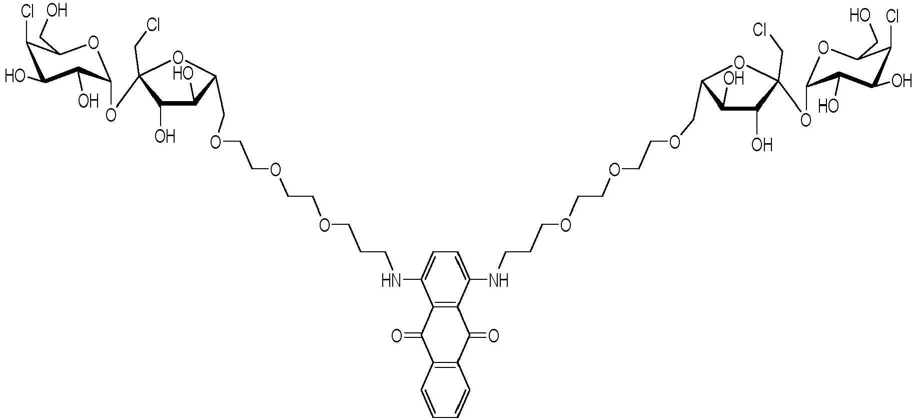

### Result from MITI model calculation: -0.09

### EXAMPLE 10

### Glucose monoether of the derivative of the base dye bound via 6-OH

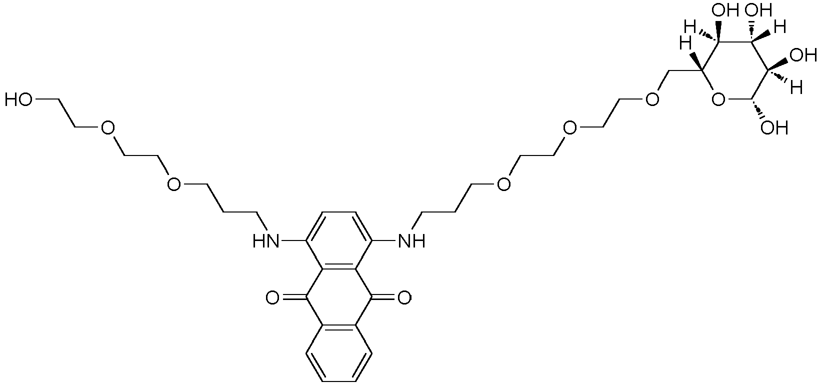

### Result from MITI model calculation: 0.2385

### EXAMPLE 11

### Glucose diether of derivative of the base dye bound via 6-OH

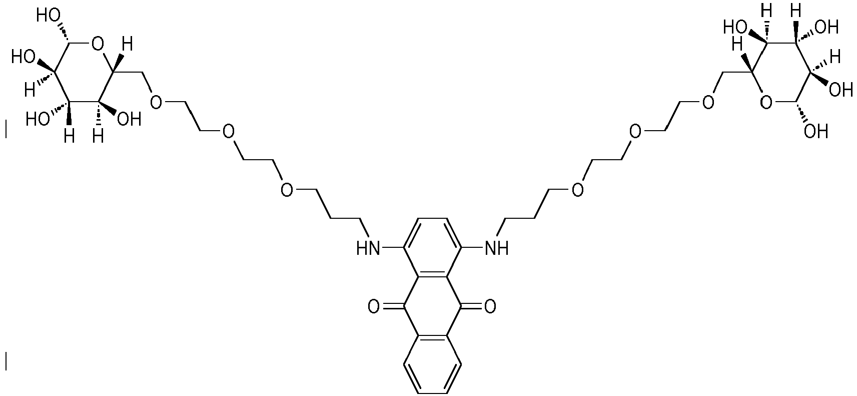

### Result from MITI model calculation: 0.354

### EXAMPLE 12

### Di-N-GLY-AM-derivative of the base dye

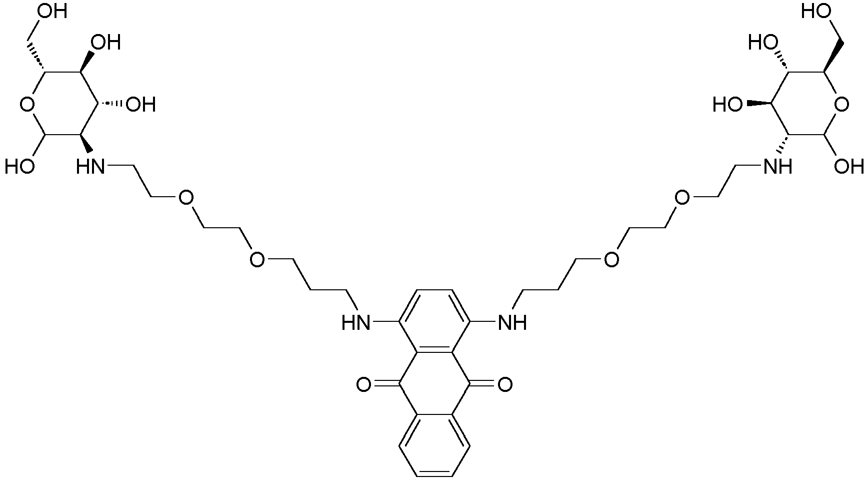

### Result from MITI model calculation: 0.5363

### EXAMPLE 13

### Di-O-GLY-AM-derivative of the base dye

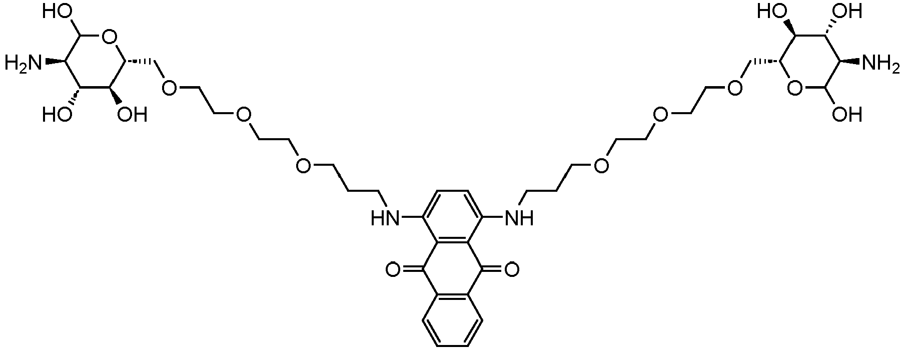

Result from MITI model calculation: 0.2434

## Claims

1. A polymeric colorant of formula (I) 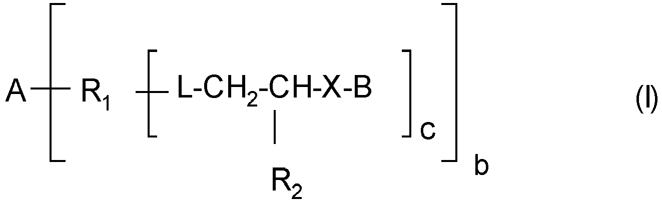
A is a chromophore selected from the group consisting of nitro, nitroso, monazo, bisazo, diarylmethane, triarylmethane, acridine, ethine, thiazole, indamine, oxazine, cyanine/methane, pthalocyanine and anthraquinone dye residues;
L is a polyalkylene oxide linker composed of one or more alkylene oxides selected from ethylene oxide, propylene oxide and butylene oxide;
R₁ is nitrogen, -NH-, oxygen, or sulfur;
R₂ is hydrogen, a methyl group, or an ethyl group;
X is -NH-, -O- or -O-C(O)-;
b is 1, 2 or 3;
c is 1 if R₁ is NH, oxygen or sulfur, and 2 if R₁ is nitrogen;
B is a sugar residue.

2. The polymeric colorant of claim 1, wherein L in formula (I) has the formula (II) 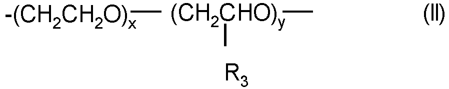 wherein
R₃ is a methyl group or an ethyl group, preferably a methyl group;
x is an integer of from 0 to 20, preferably from 0 to 10, more preferably from 0 to 5;
y is an integer of from 0 to 20, preferably from 0 to 10, more preferably from 0 to 5.

3. The polymeric colorant of claim 1 or 2, wherein the polyalkylene oxide linker L is a homopolymer.

4. The polymeric colorant of claim 1 or 2, wherein the polyalkylene oxide linker L is a copolymer.

5. The polymeric colorant of claim 4, wherein the polyalkylene oxide linker L is a block copolymer.

6. The polymeric colorant according to any one of claims 1 to 5, wherein B in formula (I) is a monosaccharide, disaccharide or oligosaccharide residue.

7. The polymeric colorant according to any one of claims 1 to 6, wherein B in formula (I) is a sugar residue derived from a monosaccharide selected from the group consisting of Glucose, Fructose, Galactose and 2-Glucoseamine.

8. The polymeric colorant according to any one of claims 1 to 6, wherein B in formula (I) is a sugar residue derived from a disaccharide selected from the group consisting of Lactose, Maltose, Saccharose, Isomaltose, Maltulose, Cellubiose and Lactulose.

9. The polymeric colorant according to any one of claims 1 to 6, wherein B in formula (I) is a sugar residue derived from an oligosaccharide selected from the group consisting of Chitosan and Oligosacharides composed of Glucose, Galactose, Fructose and/or Mannose units.

10. The polymeric colorant according to any one of claims 1 to 9, wherein the chromophore A is selected from the group consisting of anthraquinone, monoazo, bisazo, triphenylmethane, cyanine/methine and phthalocyanine dye residues.

11. The polymeric colorant according to claim 10, wherein the chromophore A is an anthraquinone dye residue.

12. The polymeric colorant according to claim 11 having the general formula (III): 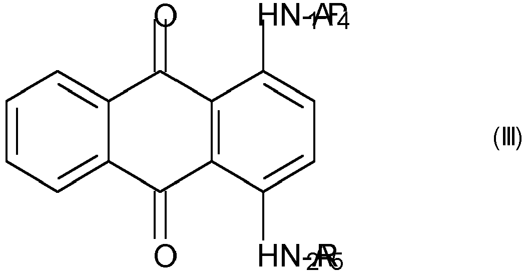 wherein
A₁ and A₂ are, independently of each other, a polyethyleneoxy-, a polypropyleneoxy-, or a polyethyleneoxy-/polypropyleneoxy-linker;
the number of repeating ethyleneoxy- and/or propyleneoxy-units in each of A1 and A2 is less than or equal to 25; or
A₁ and A₂ are, independently of each other, -CH₂CH₂CH₂-M[(CH₂CH₂O)ₓ-CH₂CH₂NH-]_{y};
M can be either O or N and x = 1 - 5, and if M is O then y = 1, and if M is N then y = 2; and
R₄ and R₅ represent the terminal group of the polyalkyleneoxy chain and are, independently of each other, sugar residues selected from monosaccharides, disaccharides, oligosaccharides and polysaccharides.

13. The use of the polymeric colorants according to any one of claims 1 to 12 as non-staining dyes in laundry detergent formulations, fabric treatment compositions, automatic dishwasher detergent compositions, dishwashing liquids, handsoap formulations, hair shampoo compositions, household and toilet cleaner compositions.
